# EUROPEAN PATENT APPLICATION

(11) **EP 0 974 741 A1**
(43) Date of publication of application: **26.01.2000**
(21) Application number: 99113596.3
(22) Date of filing: 08.07.1999
(51) Int. Cl.: F01N 7/18, F16L 51/02, F16L 27/111

(54) **Flexible tube of an exhaust pipe for motor vehicles**

(30) Priority: 20.07.1998 KR 9829120
(71) Applicant: SJM Company Limited, Ansan-City, Kyunggi-do 425-100 (KR)
(72) Inventor: Shin, Yeon Ho, 109-303, Block Shinho Apt., Shihung-shi, Kyunggi-do 429-450 (KR)
(74) Representative: KOHLER SCHMID + PARTNER

(57) **Abstract**

This invention relates to a flexible tube of an exhaust pipe for motor vehicles. The flexible tube includes a cylindrically corrugated bellows member(10) made of metallic material; an interlock member(20) spirally formed and positioned with a prescribed gap from the bellows member(10), and for absorbing the displacements due to the various motions of the exhaust pipe; a braid member(30) for surrounding the outside of the bellows member(10); two caps(40) for pressing both end parts of the braid member(30); two ring-shaped intermediate members(50) respectively having one end fixed to the bellows member(10) and the other end fixed to be overlapped with the interlock member(20) outside of the intermediate members; and an isolating member(60) positioned in a gap between the bellows member(10) and the interlock member(20) to prevent the bellows member(10) and the interlock member(20) from directly contacting, wherein the isolating member(60) protects the bellows member(10) from abrasion and damage to prevent leakage of gas, and absorbs the extension, compression and bending displacements. Therefore, this invention can increase its lifetime.

## Description

This invention relates to a flexible tube of an exhaust pipe for motor vehicles, more specifically, to a flexible tube of an exhaust pipe for motor vehicles which can prevent unpleasant noise produced between an interlock member and a bellows member and prevent the leakage of exhaust gas due to the abrasion and damage of the bellows member by frequent contact.

Generally, an exhaust pipe is connected with the engine of the vehicle to emit the exhaust gas. Usually, a connecting means for connecting the exhaust pipe is installed between the engine and the exhaust pipe to absorb vibration, stress and thermal deformation.

Referring to the disclosure of EP 0410089 A1, the connecting means comprises a bellows member made of metallic material and cylindrically corrugated to absorb the extension, compression, bending displacements, and so on, an interlock member for absorbing the extension, compression and bending displacements and resiliently restrict the displacements within the elasticity limit of the bellows member to allow the exhaust gas to flow smoothly and to protect the bellows member from the exhaust gas of high temperature, and a braid member surrounding the bellows member, wherein both end parts of the bellows member, the interlock member and the braid member are pressed with caps circumferentially and spot-welded.

One end of the connecting means is connected to the exhaust pipe and the other end is connected to the engine, so that the exhaust gas may flow from the engine into the pipe and the vibration, impact or deformation caused between the engine and the exhaust pipe may be absorbed by the bellows member and the interlock member.

The interlock member is made in the form of a continuous spiral loop and cut by art appropriate length to be fixed with the bellows member, where the fixing method thereof greatly influences on the durability and the noise of the connecting means.

The durability of the above connecting means is determined by fixing means for integrally connecting both end parts of the bellows member and the interlock member.

Therefore, fixing means for connecting the absorbing means such as the interlock member and the bellows member becomes one of the most important factors in the aspects of durability and reliability.

In Korean Utility Model Registration No. 101514 which is assigned to the same assignee as the present invention, a flexible tube for connecting the exhaust pipes is disclosed. The flexible tube has an intermediate member as the fixing means for connecting respective end part of the interlock member and bellows member.

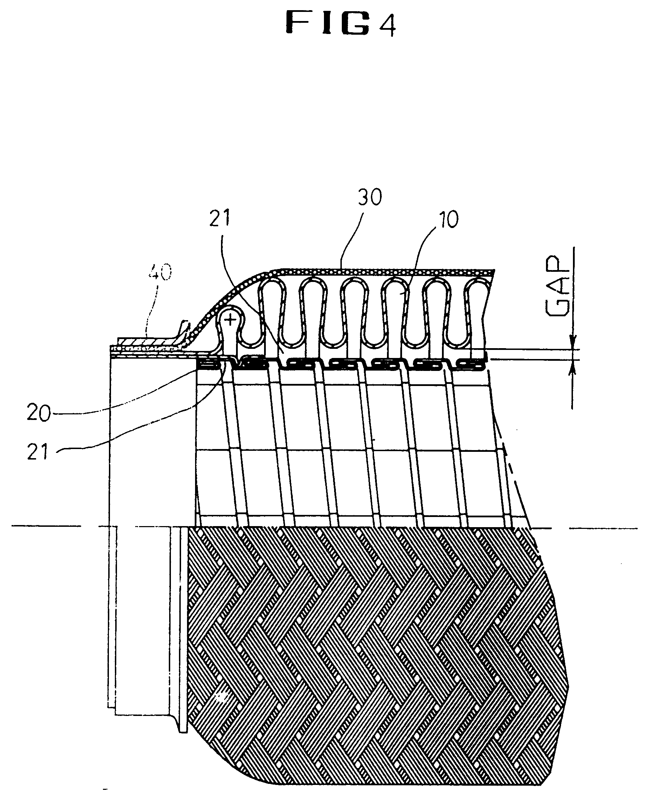

Fig. 4 enlargedly illustrates the conventional flexible tube for connecting the exhaust pipe. In Fig. 4, the flexible tube has a gap formed between the interlock member and the bellows member.

The flexible tube for connecting the exhaust pipe of this type is in lower danger of leakage of exhaust gas, since the flexible tube has a short length itself, so that the abrasion and damage of the bellows member and the unpleasant noise caused by direct contact of the bellows member with the interlock member in the gap can be prevented considerably.

However, there is a recent trend toward manufacture of vehicles with longer flexible tube having very good flexibility. In the longer flexible tube, the unpleasant noise, the abrasion and damage of the bellows member occurr by direct contact of the interlock member with the bellows member due to the vibration and impact produced during moving.

To prevent the unpleasant noise and the abrasion, it can be considered that the gap between the interlock member and the bellows member is sufficiently widened not to directly contact the interlock member with the bellows member. However, since the outer diameter of the connecting means for the exhaust pipe is restricted due to the limited installation area and the inner diameter thereof must be sufficiently widened to allow exhaust gas to flow into the interlock member smoothly, the flexible tube can not have the sufficiently widened gap between the interlock member and the bellows member.

It is, accordingly, an object of the present invention to provide a flexible tube of an exhaust pipe for motor vehicles which can prevent unpleasant noise occurred by direct contact of the interlock member with the bellows member.

It is a further object to provide a flexible tube of an exhaust pipe for motor vehicles which can prevent the leakage of exhaust gas due to abrasion by direct contact of the interlock member with the bellows member, thus improving reliability and flexible performance of the product.

The forgoing objects are accomplished by providing the flexible tube of the exhaust pipe for motor vehicles, the flexible tube comprising: a cylindrically corrugated bellows member made of metallic material; an interlock member spirally formed to form spiral grooves and positioned with a prescribed gap from the bellows member, and for absorbing effectively the displacements due to the various motions of the exhaust pipe; a braid member for surrounding the outside of the bellows member; two caps for pressing both end parts of the braid member; two ring-shaped intermediate members respectively having one end fixed to both end parts of the bellows member and the other end fixed to be overlapped with both end parts of the interlock member outside of the intermediate members; and an isolating member positioned in a gap between the bellows member and the interlock member to block the bellows member and the interlock member from directly contacting each other.

Since the isolating member prevents the direct contact of the bellows member with the interlock member, it is possible to prevent the unpleasant noise, the abrasion and damage of the bellows member during moving. Furthermore, the present invention can absorb extension and compression since the isolating member is made of axial flexible material, and increase the overall lifetime of the exhaust pipe and passenger comfort.

The foregoing objects and advantages and other more specific objects will be evident when proceeding through the following detailed description of an illustrated embodiment of the invention, particularly when considered in connection with the accompanying drawings in which:
Fig. 1 is a sectional view, with portions broken away for clarity, of a preferred embodiment of this invention;
Fig. 2 is a sectional view, with portions broken away for clarity, of another preferred embodiment of this invention;
Fig. 3 is an enlarged sectional view of essential parts of this invention;
Fig. 4 is an enlarged sectional view of the prior art; and
Figs. 5 and 6 are enlarged views showing the weaved states of an isolating member of this invention.

It will be readily understood that the components of the present invention, as generally described and illustrated in the figures herein and accompanying text, could be arranged and designed in a wide variety of different configurations while still utilizing the inventive concept.

The presently preferred embodiments of the invention will be best understood by reference to the drawings, wherein like parts are designated by like numerals throughout.

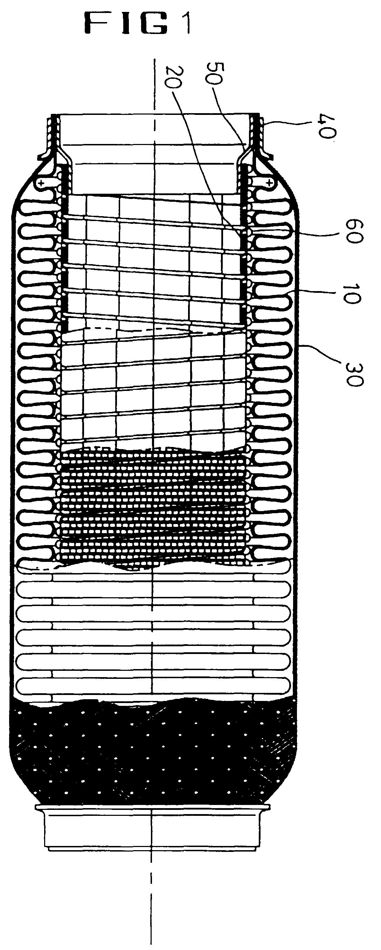

Fig. 1 is a sectional view, with portions broken away for clarity, of a fundamental structure of this invention. In Fig. 1, an isolating member 60 is positioned between a bellows member 10 and an interlock member 20.

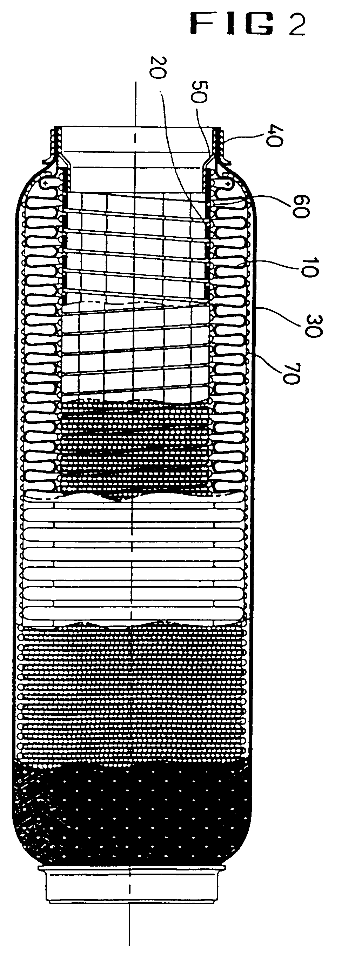

Fig. 2 shows another embodiment of this invention. In Fig. 2, the isolating member 60 is positioned between the interlock member 20 and the bellows member 10, and an outer isolating member 70 is also positioned between the bellows member 10 and a braid member 30.

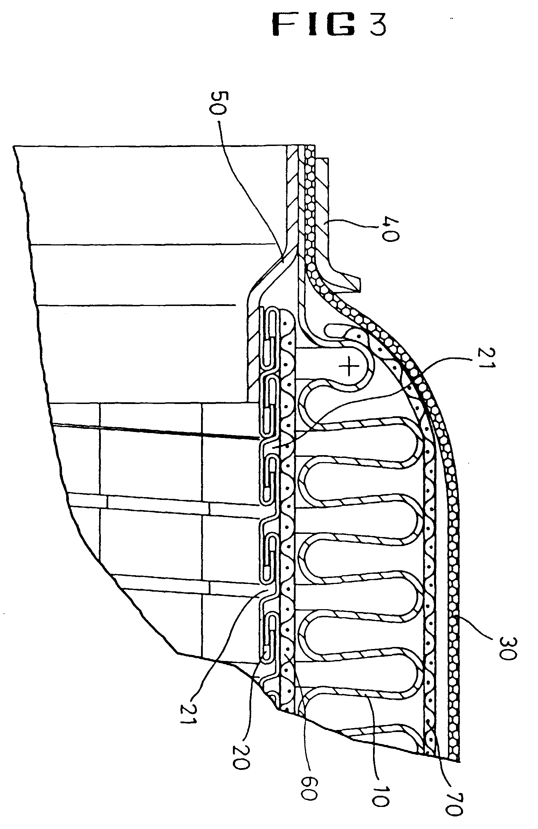

Fig. 3 illustrates an enlarged view of essential parts of Fig. 2. As shown in Fig. 3, the bellows member 10 is formed in a cylindrically corrugated shape. The cylindrically corrugated bellows member 10 is recovered in its original shape when the external force is removed after absorbing the axial and the bending displacements.

The interlock member 20 is located with a prescribed gap from the bellows member 10. The interlock member 20 is spirally wound to form spiral grooves 21, thereby absorbing the deflections due to the various motions of the exhaust pipe.

The bellows member 10 is surrounded by the braid member 30 formed by weaving or knitting a small-diameter metal wire. The bellows member 10 and the braid member 30 are pressed by caps 40 at their both end parts.

The bellows member 10 and the interlock member 20 are connected together by fixing two ring-shaped intermediate members 50 at both ends thereof respectively.

The intermediate members 50 are bent at the middle part to form a two-stepped shape. At one end of the intermediate member 50, the ends of the bellows member 10, the braid member 30, and the cap 40 are aligned together as shown in Fig. 3 and are fixably engaged altogether by clamping, spot-welding, or the like. At the other end of the intermediate member 50, the interlock member 20 is aligned outside the intermediate member 50 and fixably engaged together by spot-welding at several places. Therefore, the bellows member 10 and the interlock member 20 can be connected by the intermediate members 50.

The most important feature of this invention is that the isolating member 60 is positioned between the interlock member 20 and the bellows member 10 so as to prevent uncomfortable noise, abrasion and damage of the bellows member 10.

The isolating member 60 between the interlock member 20 and the bellows member 10 is positioned to block the interlock member 20 and the bellows member 10 from directly contacting each other and to provide elasticity in circumferential direction and axial direction.

The isolating member 60 is made of elastic material having elasticity in vertical direction, circumferential direction and axial direction, and having good durability and heat-resistance. For this, it is preferable that cylindrical meshes formed by weaving or knitting a small-diameter wires are used.

Preferably, the small wire has a diameter of 0.1-0.3mm and is a stainless steel wire having good heat-resistance.

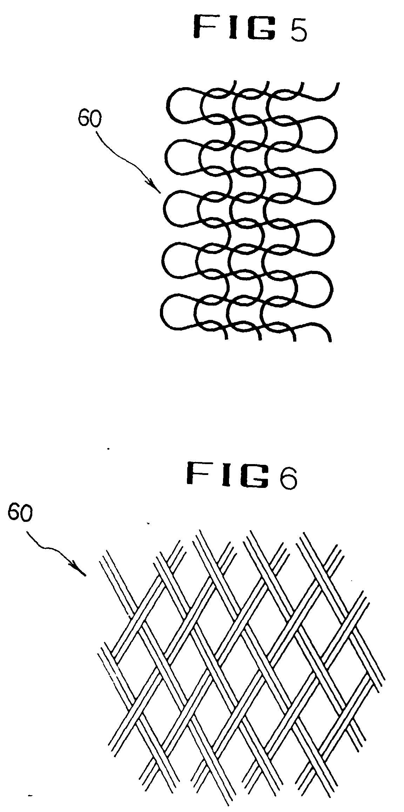

Figs. 5 and 6 show weaved states of the isolating member 60 respectively.

Fig. 5 illustrates the weaved state that the stainless steel wires are weaved in a loop shape with one another. Fig. 6 illustrates the weaved state that the stainless steel wires are weaved in a lattice shape. However, other proper netting shape having the same function and use may be used.

Returning to Fig. 3, the isolating member 60 approximately has the same length as the interlock member 20, and is positioned on the interlock member 20 which is located on the end of the intermediate member 50. The isolating member 60 and the interlock member 20 are fixed onto the end of the intermediate member 50 by spot-welding at several places.

However, other means of fixing the isolating member 60 may be used in order for the isolating member 60 not to be moved. Alternatively, the isolating member 60 may be positioned freely without fixing by the fixing means.

As shown in Figs. 2 and 3, the outer isolating member 70 which is made of material having the same shape and quality as the isolating member 60 may be also positioned between the bellows member 10 and the braid member 30.

The outer isolating member 70 is provided to prevent the unpleasant noise, the abrasion and damage of the bellows member 10 occurred by directly contacting the bellows member 10 with the braid member 30, and to protect the damage of the bellows member 10 by hit of stones or others from the road during running.

The outer isolating member 70 is fixed onto the bellows member 10 by spot-welding in the same way as the isolating member 60. However, the outer isolating member 70 may be positioned freely without any fixing means.

According to the present invention, the isolating member 60 blocks the bellows member 10 and the interlock member 20 from directly contacting each other, and the outer isolating member 70 blocks the bellows member 10 and the braid member 30 from contacting and protects the outside of the bellows member 10. Therefore, the isolating members 60 and 70 can prevent effectively the abrasion and damage of the bellows member 10 caused by frequently contacting the bellows member 10 with the interlock member 20 and the braid member 30, thus preventing positively the leakage of exhaust gas. Furthermore, the isolating members 60 and 70 are made of axial flexible material, thus absorbing the axial displacement and protecting the bellows member 10 from damage and abrasion.

The present invention may be embodied in other specific forms without departing from its spirit or essential characteristics. The described embodiments are to be considered in all respects only as illustrative, and not restrictive. The scope of the invention is, therefore, indicated by the appended claims, rather than by the foregoing description. All changes which come within the meaning and range of equivalency of the claims are to be embraced within their scope.

## Claims

1. A flexible tube of an exhaust pipe for motor vehicles, the flexible tube comprising:
a bellows member (10) made of metallic material, the bellows member (10) cylindrically corrugated for absorbing the displacements due to the various motions of the exhaust pipe;
an interlock member (20) for absorbing effectively the deflections due to the various motions of the exhaust pipe, the interlock member (20) being spirally formed to form spiral grooves and positioned with a prescribed gap from the bellows member (10);
a braid member (30) for surrounding the outside of the bellows member (10);
two caps (40) for pressing the both end parts of the braid member (30);
two ring-shaped intermediate members (50) for connecting the end parts of the bellows member (10) and the interlock member (20), the intermediate members (50) respectively having one end fixed to the end of the bellows member (10) and the other end fixed to be overlapped with the end of the interlock member (20) outside of the intermediate members (50) and;
an isolating member (60) positioned in a gap between the bellows member (10) and the interlock member (20), wherein the isolating member (60) blocks the bellows member (10) and the interlock member (20) from directly contacting each other so that the isolating member (60) prevents the abrasion and damage of the bellows member (10) to prevent leakage of the gas.

2. A flexible tube of an exhaust pipe for motor vehicles according to claim 1, characterized by an outer isolating member (70) positioned in the gap between the bellows member (10) and the braid member (30) to prevent the unpleasant noise, the abrasion and damage occurred by directly contacting the bellows member (10) with the braid member (30).

3. A flexible tube of an exhaust pipe for motor vehicles according to claim 1 or 2, characterized in that the isolating member (60) has approximately the same length as the interlock member (20).

4. A flexible tube of an exhaust pipe for motor vehicles according to any one of the preceding claims, characterized in that the isolating member (60) is positioned on the interlock member (20) which is located on the end of the intermediate member (50) and the intermediate member (50), interlock member (20) and the isolating member (60) are fixed together by spot-welding.

5. A flexible tube of an exhaust pipe for motor vehicles according to any one of the preceding claims, characterized in that the isolating member (60) and the outer isolating member (70) are made by weaving stainless steel wires to have elasticity.
